# EUROPÄISCHE PATENTSCHRIFT

(11) **EP 1 143 874 B1**
(45) Veröffentlichungstag und Bekanntmachung des Hinweises auf die Patenterteilung: **20.07.2005**
(21) Anmeldenummer: 00988577.3
(22) Anmeldetag: 10.11.2000
(51) Int. Cl.: A61C 9/00

(54) **VORRICHTUNG ZUM ABDRÜCKEN EINES GEBISSMODELLS VON EINER TRAGPLATTE**
DEVICE FOR SEPARATING A DENTITION MODEL FROM A SUPPORTING PLATE
DISPOSITIF POUR SEPARER UN MODELE DE PROTHESE DENTAIRE D'UNE PLAQUE SUPPORT

(30) Priorität: 17.11.1999 DE 19955154
(43) Veröffentlichungstag der Anmeldung: 17.10.2001
(73) Patentinhaber: Azzaretto, Michael, 57470 Hombourg Haut (FR)
(72) Erfinder: Azzaretto, Michael, 57470 Hombourg Haut (FR)
(74) Vertreter: Holtfoth, Hans-Jürgen
(86) Internationale Anmeldenummer: PCT/DE2000/003936
(87) Internationale Veröffentlichungsnummer: WO 2001/035853

(56) Entgegenhaltungen:
- DE-A- 3 825 014
- DE-U- 9 012 124
- DE-U- 29 605 973

## Beschreibung

Die Erfindung betrifft eine Vorrichtung zum Abdrücken eines Gebißmodells von einer Tragplatte mit Haltestiften.

Bei der Herstellung eines Gebißmodells wird eine negative Gebißabformung eines Patienten mit flüssiger Modellmasse, z.B. Gips, aufgefüllt und eine Tragplatte mit Haltestiften auf die flüssige Modellmasse so aufgesetzt, daß die freien Haltestiftenden in die aushärtende Modellmasse hineinragen.
Das auf der Tragplatte aufsitzende, ausgehärtete Gebißmodell muß zur Bearbeitung von der Tragplatte entfernt und später wieder auf diese zurückgesetzt werden, damit, z.B. beim Zersägen des Gebißmodells in einzelne Zahn- oder Kiefersegmente, die Tragplatte nicht beschädigt wird.

Das Abnehmen des ausgehärteten Gebißmodells von der Tragplatte mit oder ohne gleichzeitiges Herausziehen der Haltestifte aus der Tragplatte ist oft schwierig, da die ausgehärtete Modellmasse an der Tragplatte fest anhaftet, so daß es häufig zu Beschädigungen oder sogar Bruch des Gebißmodells kommt.

Aus der DBGM 296 05 973 U1 ist eine Vorrichtung zum Abdrücken eines Gebißmodells von der Tragplatte bekannt.

Die Vorrichtung ist beschrieben für Tragplatten, bei welchen die Haltestifte in der Tragplatte verbleiben und nicht mitsamt dem Gebißmodell abgehoben werden.

Die Vorrichtung zum Abdrücken besteht hierbei aus einem plattigen Trennteil, welches auf einem an die Tragplattenoberseite mittig angeformten Ansatzteil aufliegt und mit seinem äußeren Rand das Zahnmodell an dessen Innenbogen von innen her untergreift.

Die Tragplatte mit dem angeformten Ansatzteil ist mittig mit einem Durchgangsloch versehen, in welchem eine Mutter fest verankert ist. Die Mutter dient zur Aufnahme einer Abdrückschraube, die beim Eindrehen mit ihrem Schaubenende an dem nicht durchbohrten plattigen Trennteil anstößt und dieses von der übrigen Tragplatte abhebt. Da das Trennteil mit seinem Rand das Gebißmodell von innen her unterfaßt, greift das Trennteil am Gebißmodell auf dessen gesamten Innenbogen an und drückt das Gebißmodell von den Haltestiften und der Tragplatte ab.

Nachteilig ist bei der beschriebenen Vorrichtung jedoch, dass es beim Abdrücken leicht zu einem Verkanten des Gebißmodells an den Haltestiften kommt, da der Druck nur mittig ausgeübt wird und nicht an den Stellen größter Haftung.
So können beim Abdrücken des Gebißmodells von der Tragplatte z.B. durch Spannungen im Gebißmodell, Risse auftreten, die zu Beschädigungen oder Bruch des Gebißmodells führen.

Aus der DE-U-9012124 ist eine Tragplatte für ein Gebißmodell mit Haltestiften bekannt, die Durchbrechungen im Bereich der Haltestifte aufweist, durch welche Erhöhungen auf der Oberseite einer weiteren Abdrückplatte von der Unterseite der Tragplatte her durchgreifen und das Gebißmodell von der Tragplatte abdrücken.

Nachteilig ist hierbei, dass beim Gießen des Gebißmodells die Modelliermasse auch in die Durchbrechungen auf der Tragplatte fließt und diese verschließt, so dass später die Erhöhungen auf der Abdrückplatte nicht sofort in die Durchbrechungen eingreifen können.
Zudem wird der Druck zum Abdrücken des Gebißmodells von der Tragplatte nicht gleichmäßig auf die Unterseite des Gebißmodells ausgeübt, so dass das Gebißmodell leicht durch zu starken und/oder zu ungleichmäßigen Druck beschädigt wird.

Der Erfindung liegt die Aufgabe zugrunde, eine Vorrichtung zum Abdrücken eines Gebißmodells von einer Tragplatte mit Haltestiften zu schaffen, die beim Abdrücken einen gleichmäßigen Druck direkt an den Stellen größter Haftung ausübt, nämlich unmittelbar dort, wo die Haltestifte in der Tragplatte lösbar oder nicht lösbar stecken, um ein Verkanten oder sogar einen Bruch des Gebißmodellkörpers zu vermeiden.

Die Aufgabe wird nach der Erfindung durch eine Vorrichtung zum Abdrücken eines Gebißmodells von einer Tragplatte mit Haltestiften mit den Merkmalen der Patentansprüche gelöst.

Nachfolgend werden anhand der Zeichnungen mehrere Ausführungsformen der Erfindung näher erläutert und beschrieben.

Es zeigen
- Figur 1: eine Tragplatte mit aufsitzendem Gebißmodell sowie eine Abdrückplatte und einen dazwischen angeordneten Paßstückkörper in Seitenansicht, etwa in natürlicher Größe,
- Figur 2: eine Tragplatte mit aufsitzendem Gebißmodell und mit aus der Unterseite der Tragplatte herausragenden Haltestiftenden sowie eine Abdrückplatte in Seitenansicht, etwa in natürlicher Größe,
- Figur 3: eine Tragplatte mit aufsitzendem Gebißmodell und mit aus der Unterseite der Tragplatte herausragenden Haltestiften sowie eine Abdrückplatte und eine u-förmige Klammer, etwa in natürlicher Größe und
- Figur 4: eine Tragplatte mit aufsitzendem Gebißmodell und Vertiefung auf der Unterseite, aus welcher die Haltestiftenden herausragen sowie eine Abdrückplatte mit Erhöhung auf der Oberseite in Seitenansicht, etwa in natürlicher Größe.

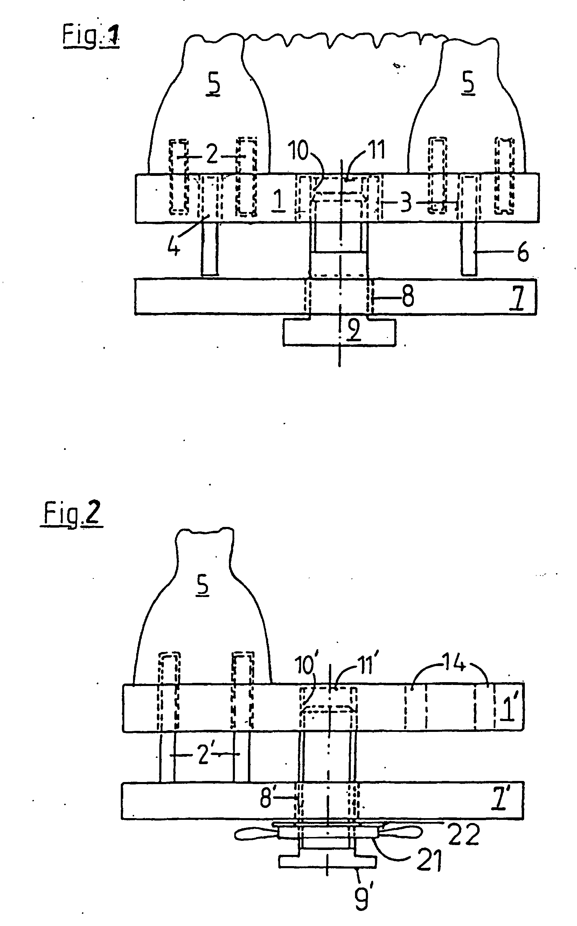

Die in Figur 1 dargestellte Vorrichtung besteht aus einer Tragplatte 1 mit aufsitzendem Gebißmodell 5 sowie Haltestiften 2. In der Tragplatte 1 sind Durchbrechungen 3 angeordnet, durch welche ein Abdrückkörper 4 mit aus der Unterseite der Tragplatte 1 herausragenden Enden 6, welcher von der Oberseite der Tragplatte 1 her eingesteckt ist, greift. Die Enden 6 des Abdrückkörpers 4 liegen an der Oberseite der Abdrückplatte 7 an.
Mittels einer Schraube 9 wird die Abdrückplatte 7 an die Tragplatte 1 geführt.

Die Schraube 9 durchgreift in der Figur 1 eine mittig in der Abdrückplatte 7 angeordnete Bohrung 8, durch welche von der Unterseite der Abdrückplatte 7 her die Schraube 9 zur Heranführung der Abdrückplatte 7 an die Tragplatte 1 geführt wird, wobei die Schraube 9 in eine mittig auf der Unterseite der Tragplatte 1 angeordnete und mit einem Gewinde 10 versehene Sacklochbohrung 11 eingreift.

Der Abdrückkörper 4 besteht dabei aus mindestens einem separaten Paßstück, welches vorteilhafterweise in einer auf der Oberseite der Tragplatte 1 dem Verlauf der Haltestifte 2 folgenden Vertiefung eingebettet ist und mit seinen Enden 6 die Durchbrechungen 3 durchgreift.
Auf diese Weise wird verhindert, dass beim Ausgießen der Modelliermasse auf die Tragplatte dieselbe in die Durchbrechungen 3 fließt.

Das Schraubenende der Schraube 9 wird in die Sacklochbohrung 11 auf der Unterseite der Tragplatte 1 eingeschraubt, so dass allmählich die Abdrückplatte 7 auf die unteren Enden der aus der Unterseite der Tragplatte 1 herausragenden Enden 6 des eingesteckten Paßstückes 4 drückt, wobei der einheitliche Abdrückkörper 4, das Paßstück, seinerseits einen Druck auf die Unterseite des auf der Tragplatte 1 aufsitzenden Gebißmodells 5 ausübt und dieses von der Tragplatte 1 ohne Verkanten abdrückt.

Figur 2 zeigt eine weitere Vorrichtung zum Abdrücken eines Gebißmodells 5 von einer Tragplatte 1' mit Haltestiften 2', bei welcher der Druck zum Abdrücken des Gebißmodells 5 von der Tragplatte 1' unmittelbar auf die im Gebißmodell 5 befestigten und die Durchbrechungen 14 der Tragplatte 1' durchgreifenden Haltestifte 2' ausgeübt wird.
Auf der Unterseite der Tragplatte 1' befindet sich mittig eine Sacklochbohrung 11' mit Gewinde 10'.
Unterhalb der Tragplatte 1' ist die Abdrückplatte 7' angeordnet, die mittig eine Bohrung 8' aufweist, durch welche von der Unterseite der Abdrückplatte 7' her die Schraube 9' geführt wird.

Zwischen der Abdrückplatte 7' und dem Kopf der Schraube 9' ist eine Flügelmutter 21 mit Unterlegscheibe 22 angeordnet, so dass die Sacklochbohrung 11' auf der Unterseite der Tragplatte 1' nur sehr flach ausgebildet sein kann und lediglich der Fixierung des unteren Schraubenendes der Schraube 9' dient.

Durch Drehen der Flügelmutter 21 in Richtung Schraubenende wird die Abdrückplatte 7' gleichmäßig auf die aus der Tragplatte 1' herausragenden Enden der Haltestifte 2' gedrückt.
Das Gebißmodell 5' wird verkantungsfrei und ohne Spannungen im Gebißmodellkörper einfach von der Tragplatte 1' gelöst.

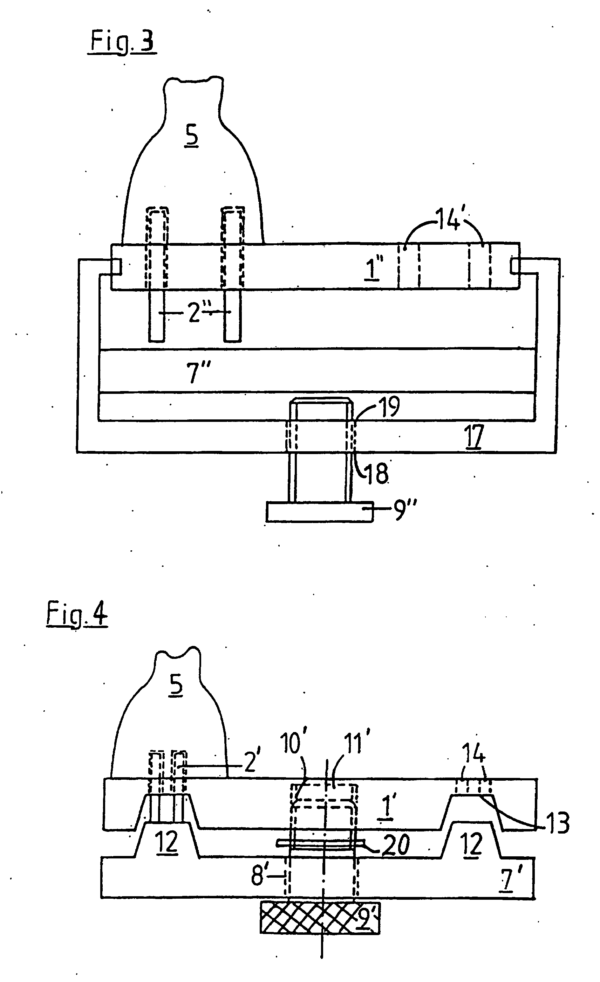

Figur 3 zeigt eine weitere Ausführungsform der Vorrichtung zum Abdrücken eines Gebißmodells von einer Tragplatte mit Haltestiften, bei welcher unterhalb der Abdrückplatte 7" eine u-förmige Klammer 17 angeordnet ist, die die Abdrückplatte 7" und die Tragplatte 1 " von der Unterseite her umgreift und an den Seiten der Tragplatte 1" lösbar befestigt ist, z.B. mittels zweier Nasen in zwei entsprechende Aussparungen einrastet.

Aus der Unterseite der Tragplatte 1 " ragen die Enden der Haltestifte 2" aus den Durchbrechungen 14' heraus und liegen an der Oberseite der Abdrückplatte 7" an.
Die u-förmige Klammer 17 weist in ihrer Mitte eine durchgängige Bohrung 18 mit Gewinde 19 auf, in welche eine Schraube 9" eingeschraubt wird, die mit ihrem unteren Ende an der Unterseite der Abdrückplatte 7" anliegt.

Durch Eindrehen der Schraube 9" übt diese einen Druck auf die Abdrückplatte 7" aus, die ihrerseits auf die Haltestifte aus den Durchbrechungen 14 , drückt und somit das auf der Tragplatte 1 " aufsitzende Gebißmodell 5 verkantungsfrei abhebt.

Figur 4 zeigt eine andere Bauform der Vorrichtung aus Figur 3, bei welcher die Tragplatte 1' auf ihrer Unterseite eine bogenförmige Vertiefung 13 aufweist, in welche die Enden der Haltestifte 2' hineinragen.

Paßgenau weist die Abdrückplatte 7' auf ihrer Oberseite eine bogenförmige Erhöhung 12 auf, die beim Eindrehen der Schraube 9' in die Sacklochbohrung 11' mit Gewinde 10' die Haltestiftenden sowie das Gebißmodell 5 von der Tragplatte 1' abdrückt.
Damit die Schraube 9' in der Bohrung 8' der Abdrückplatte 7' gehalten wird, ist eine flache Mutter 20 auf die Schraube 9' aufgeschraubt.

Die Schraube 9' ist vorteilhafterweise als Rändelschraube ausgebildet, damit sie leicht mit einer Hand zu bedienen ist.

Nicht dargestellt ist eine vorteilhafte Ausführungsform der Erfindung, bei welcher auf der Abdrückplatte, die eine mittige Bohrung aufweist, oberseitig eine Erhöhung angeordnet ist, an welcher die aus der Unterseite der entsprechenden Tragplatte herausragenden Enden entweder des Paßstücks oder der Haltestifte anliegen.

## Patentansprüche

1. Vorrichtung zum Abdrücken eines Gebißmodells umfassend eine Tragplatte (1, 1', 1") mit unlösbar oder lösbar eingesteckten Haltestiften (2, 2', 2") sowie mindestens eine Durchbrechung (3, 14, 14') im Bereich der Haltestifte (2, 2', 2") und eine der Tragplatte (1, 1', 1") zugeordneten Abdrückplatte (7, 7', 7"),
**dadurch gekennzeichnet, daß**
- die mindestens eine Durchbrechung (3, 14, 14') konisch sich nach unten verjüngend oder zylindrisch ausgebildet ist, und
- mindestens ein Abdrückkörper (4, 2', 2") in die mindestens eine Durchbrechung (3, 14, 14') von der Oberseite der Tragplatte (1, 1', 1 ") her eingesetzt ist,
- welcher mit seinem unteren Ende (6, 2', 2") aus der Unterseite der Tragplatte (1, 1', 1 ") herausragt und dort an der Oberseite der Abdrückplatte (7, 7', 7") anliegt, wobei
- eine Schraube (9, 9', 9") direkt an der Tragplatte (1, 1', 1") oder an einer an der Tragplatte (1, 1', 1") befestigten u-förmigen Klammer (17) zur Heranführung der Abdrückplatte (7, 7', 7") an die Tragplatte (1, 1', 1 ") geführt wird.

2. Vorrichtung nach Anspruch 1,
**dadurch gekennzeichnet, dass**
als Abdrückkörper (4) in die Tragplatte (1) in die mindestens eine Durchbrechung (3) mindestens ein separates Paßstück (4, 6) eingesteckt ist.

3. Vorrichtung nach Anspruch 2,
**dadurch gekennzeichnet, dass**
- auf der Oberseite der Tragplatte (1) dem Verlauf der eingesteckten Haltestifte (2) folgend eine Vertiefung ausgebildet ist,
- in welcher sich mindestens zwei Durchbrechungen (3) befinden, wobei
- die in die Durchbrechungen (3) von der Oberseite der Tragplatte (1) her eingesetzten Paßstücke (4, 6) an ihrem oberen Ende über eine paßgenau in der Vertiefung liegende Verbindung miteinander verbunden sind und so einen einzigen Paßstückkörper bilden.

4. Vorrichtung nach Anspruch 1,
**dadurch gekennzeichnet, dass**
als Abdrückkörper (4) mehrere im Gebißmodell (5) befestigte Haltestifte (2', 2") die in der Tragplatte angeordneten Durchbrechungen (14, 14') durchgreifen und aus der Unterseite der Tragplatte (1', 1") herausragen.

5. Vorrichtung nach Anspruch 1,
**dadurch gekennzeichnet, dass**
- die Abdrückplatte (7, 7') eine mittig angeordnete Bohrung (8, 8') aufweist,
- durch welche von der Unterseite der Abdrückplatte (7, 7') her die Schraube (9, 9') zur Heranführung der Abdrückplatte (7, 7') an die Tragplatte (1, 1') geführt wird,
- welche in eine mittig auf der Unterseite der Tragplatte (1, 1') angeordnete und mit einem Gewinde (10, 10') versehene Sacklochbohrung (11, 11') eingreift.

6. Vorrichtung nach Anspruch 1,
**dadurch gekennzeichnet, dass**
- eine in etwa u-förmige Klammer (17) die Tragplatte (1") und die Abdrückplatte (7") von der Unterseite her umgreift und an der Tragplatte (1") lösbar befestigt ist, wobei
- die u-förmige Klammer (17) mittig eine Bohrung (18) mit Gewinde (19) aufweist,
- durch welche von der Unterseite der Klammer (17) her die Schraube (9") zur Heranführung der Abdrückplatte (7") an die Tragplatte (1 ") geführt wird.

7. Vorrichtung nach Anspruch 1,
**dadurch gekennzeichnet, dass**
- die Unterseite der Tragplatte (1, 1', 1") mindestens eine Vertiefung (13) aufweist,
- in welche mindestens eine Durchbrechung (3,14,14') mündet, und
- die Oberseite der Abdrückplatte (7, 7', 7") mindestens eine Erhöhung aufweist, die paßgenau zu der gegenüberliegenden Vertiefung (13) auf der Unterseite der Tragplatte (1, 1', 1") ausgebildet ist.

8. Vorrichtung nach Anspruch 1,
**dadurch gekennzeichnet, dass**
die Schraube (9, 9', 9") als Rändelschraube ausgebildet ist.

9. Vorrichtung nach Anspruch 5,
**dadurch gekennzeichnet, dass**
zwischen der Abdrückplatte (7, 7') und dem Kopf der Schraube (9, 9') eine Flügelmutter (21) mit Unterlegscheibe (22) auf dem Gewinde der Schraube (9, 9') angeordnet ist.

10. Vorrichtung nach Anspruch 5,
**dadurch gekennzeichnet, dass**
auf der Schraube (9, 9') im Bereich zwischen Abdrückplatte (7,7') und Tragplatte (1, 1') eine die Schraube (9, 9') in der Bohrung (8, 8') der Abdrückplatte (7, 7') haltende Mutter (20) angeordnet ist.

11. Vorrichtung nach Anspruch 5,
**dadurch gekennzeichnet, dass**
- auf der Abdrückplatte (7, 7') eine Erhöhung angeordnet ist,
- an welcher die aus der Unterseite der Tragplatte (1, 1') herausragenden Enden von Abdrückkörpern (4, 6, 2') anliegen.

## Claims

1. Device to lift off a denture model, consisting of a supporting plate (1, 1', 1") with retention pins (2, 2', 2") inserted in a removable or non-removable fashion, at least one opening (3, 14, 14') in the area of the retention pins (2, 2', 2") and a lift-off plate (7, 7', 7") assigned to the supporting plate (1, 1', 1"),
having the feature that
- the said at least one opening (3, 14, 14') is shaped to be conically narrowing or cylindrical and
- at least one lift-off body (4, 2', 2") is inserted into the said at least one opening (3, 14, 14') from the upper side of the supporting plate (1, 1', 1"), with
- the lower end (6, 2', 2") of this body projecting from the lower side of the supporting plate (1, 1', 1"), where it rests on the upper side of the lift-off plate (7, 7', 7") with
- a screw (9, 9', 9") being run directly in the supporting plate (1, 1', 1") or in a U-shaped clamp (17) fastened to the supporting plate (1, 1', 1"), this screw having the purpose of drawing the lift-off plate (7, 7', 7") towards the supporting plate (1, 1', 1").

2. Device as per Claim 1
having the feature that
at least one separate fitting head (4, 6) is inserted into the supporting plate (1) in the at least one opening (3) to act as a lift-off body (4).

3. Device as per Claim 2
having the feature that
- there is an indentation in the upper side of the supporting plate (1) made to match the shape of the inserted retention pins (2)
- in which there are at least two openings (3) and
- the fitting heads (4, 6) which are inserted into the openings (3) from the upper side of the supporting plate (1) are linked with each other at their top end by means of an element which fits exactly into the indentation and thus form one single fitting element.

4. Device as per Claim 1
having the feature that
several retention pins (2', 2") fastened in the denture model (5) run through the openings (14, 14') in the supporting plate (1') to act as a lift-off body and project from the bottom of the supporting plate (1', 1").

5. Device as per Claim 1
having the feature that
- the lift-off plate (7, 7') has a drilled hole (8, 8') located at its centre,
- through which a screw (9, 9') is run from the lower side of the lift-off plate (7, 7') to draw the lift-off plate (7, 7') towards the supporting plate (1, 1'),
- which screw engages in a blind hole (11, 11') that is located in the centre of the lower side of the supporting plate (1, 1') and has a screw thread (10, 10').

6. Device as per Claim 1
having the feature that
- an approximately U-shaped clamp (17) encompasses the supporting plate (1 ") and the lift-off plate (7") from the bottom and is fastened to the supporting plate (1") in a removable fashion with
- the U-shaped clamp (17) having a hole (18) with a screw thread (19) at its centre,
- through which the screw (9") is run from the bottom of the clamp (17) to draw the lift-off plate (7") towards the supporting plate (1").

7. Device as per Claim 1
having the feature that
- there is at least one indentation (13) in the lower side of the supporting plate (1, 1', 1"),
- into which at least one opening (3, 14, 14') leads and
- with the upper side of the lift-off plate (7, 7', 7") having at least one elevation which is made to fit exactly into the opposite indentation (13) in the lower side of the supporting plate (1, 1', 1").

8. Device as per Claim 1
having the feature that
the screw (9, 9', 9") is designed to be a knurled thumb screw.

9. Device as per Claim 5
having the feature that
there is a wing nut (21) with a washer (22) on the screw thread of the screw (9, 9') between the lift-off plate (7, 7') and the head of the screw (9, 9').

10. Device as per Claim 5
having the feature that
there is, on the screw (9, 9') in the area between the lift-off plate (7, 7') and the supporting plate (1, 1'), a nut (20) holding the screw (9, 9') in the hole (8, 8') in the lift-off plate (7, 7').

11. Device as per Claim 5
having the feature that
- there is an elevation on the lift-off plate (7, 7'),
- on which rest the ends of the lift-off bodies (4, 6, 2') projecting from the lower side of the supporting plate (1, 1').

## Revendications

1. Dispositif pour séparer un modèle de dentition comprenant une plaque support (1, 1', 1") avec des tiges de fixation (2, 2', 2") enfoncées de manière amovible ou inamovible ainsi qu'au moins une interruption (3, 14, 14') dans la région des tiges de fixation (2, 2', 2") et une plaque de séparation (7, 7', 7") associée à la plaque support (1, 1', 1"),
**caractérisé en ce que**
- l'au moins une interruption (3, 14, 14') est réalisée sous forme cylindrique ou conique se rétrécissant vers le bas, et
- au moins un corps de séparation (4, 2', 2") est inséré dans l'au moins une interruption (3, 14, 14') depuis le côté supérieur de la plaque support (1, 1', 1")
- lequel sort par le côté inférieur de la plaque support (1, 1', 1") avec son extrémité inférieure (6, 2', 2") et s'y applique contre le côté supérieur de la plaque de séparation (7, 7', 7"),
- une vis (9, 9', 9") étant guidée directement contre la plaque support (1, 1', 1") ou sur une pince (17) en forme de U fixée sur la plaque support (1, 1', 1"), pour rapprocher la plaque de séparation (7, 7', 7") de la plaque support (1, 1', 1").

2. Dispositif selon la revendication 1,
**caractérisé en ce que**
au moins une pièce d'ajustement séparée (4, 6) est enfoncée en tant que corps de séparation (4) dans la plaque support (1) dans l'au moins une interruption (3).

3. Dispositif selon la revendication 2,
**caractérisé en ce que**
- sur le côté supérieur de la plaque support (1) est réalisé un renfoncement suivant l'allure de la tige de fixation enfoncée (2),
- dans lequel se trouvent au moins deux interruptions (3),
- les pièces d'ajustement (4, 6) insérées dans les interruptions (3) depuis le côté supérieur de la plaque support (1) étant reliées les unes aux autres à leur extrémité supérieure par le biais d'une liaison située de façon ajustée exactement dans le renfoncement et forment ainsi un corps de pièce d'ajustement unique.

4. Dispositif selon la revendication 1,
**caractérisé en ce que**
plusieurs tiges de fixation (2', 2") fixées en tant que corps de séparation (4) dans le modèle de dentition (5) s'engagent à travers les interruptions (14, 14') disposées dans la plaque support et ressortent par le côté inférieur de la plaque support (1', 1").

5. Dispositif selon la revendication 1,
**caractérisé en ce que**
- la plaque de séparation (7, 7') présente un alésage (8, 8') disposé centralement,
- à travers lequel la vis (9, 9') est guidée depuis le côté inférieur de la plaque de séparation (7, 7') pour rapprocher la plaque de séparation (7, 7') de la plaque support (1, 1'),
- laquelle vient en prise dans un alésage à trou borgne (11, 11') disposé au centre sur le côté inférieur de la plaque support (1, 1') et pourvu d'un filetage (10, 10').

6. Dispositif selon la revendication 1,
**caractérisé en ce que**
- une pince (17) approximativement en forme de U vient en prise par le côté inférieur autour de la plaque support (1") et de la plaque de séparation (7") et est fixée de manière amovible à la plaque support (1"),
- la pince en forme de U (17) présentant au centre un alésage (18) avec un filetage (19),
- à travers lequel, depuis le côté inférieur de la pince (17), la vis (9") est guidée pour rapprocher la plaque de séparation (7") de la plaque support (1").

7. Dispositif selon la revendication 1,
**caractérisé en ce que**
- le côté inférieur de la plaque support (1, 1', 1") présente au moins un renfoncement (13),
- dans lequel débouche au moins une interruption (3, 14, 14'), et
- le côté supérieur de la plaque de séparation (7, 7', 7") présente au moins un rehaussement, qui est réalisé de manière ajustée exactement au renfoncement opposé (13) sur le côté inférieur de la plaque support (1, 1', 1").

8. Dispositif selon la revendication 1,
**caractérisé en ce que**
la vis (9, 9', 9") est réalisée en tant que vis moletée.

9. Dispositif selon la revendication 5,
**caractérisé en ce que**
l'on dispose un écrou à oreilles (21) avec une rondelle (22) sur le filetage de la vis (9, 9') entre la plaque de séparation (7, 7') et la tête de la vis (9, 9').

10. Dispositif selon la revendication 5,
**caractérisé en ce que**
l'on dispose un écrou (20) retenant la vis (9, 9') dans l'alésage (8, 8') de la plaque de séparation (7, 7') sur la vis (9, 9') dans la région entre la plaque de séparation (7, 7') et la plaque support (1, 1').

11. Dispositif selon la revendication 5,
**caractérisé en ce que**
- un rehaussement est disposé sur la plaque de séparation (7, 7'),
- sur lequel s'appliquent les extrémités de corps de séparation (4, 6, 2') sortant par le côté inférieur de la plaque support (1, 1').
